Europäisches Patentamt

European Patent Office

Office européen des brevets

(11) Publication number: 0 194 857
A2

# EUROPEAN PATENT APPLICATION

(21) Application number: 86301738.0

(22) Date of filing: 11.03.86

(51) Int. Cl.⁴: **C09J 3/00** , **C09J 5/00** , **C09J 7/04**

(30) Priority: 15.03.85 GB 8506751

(43) Date of publication of application:
17.09.86 Bulletin 86/38

(84) Designated Contracting States:
BE DE FR GB IT NL SE

(71) Applicant: ALLIED COLLOIDS LIMITED
P.O. Box 38 Low Moor
Bradford West Yorkshire, BD12 0JZ(GB)

(72) Inventor: Clarke, John B.
10 Shay Grove Heaton
Bradford West Yorkshire(GB)
Inventor: Johnson, Ian M.
6 Amport Close
Brighouse West Yorkshire(GB)
Inventor: Heard, Michael B.
1 Spring Street Idle
Bradford West Yorkshire(GB)

(74) Representative: Lawrence, Peter Robin Broughton et al
GILL JENNINGS & EVERY 53-64 Chancery Lane
London WC2A 1HN(GB)

(54) Aqueous adhesives.

(57) A sheet material, generally a wallcovering, is adhered to a substrate, generally a wall or ceiling, by an adhesive which is formed by contacting with water a composition that is free of liquid and comprises substantially dry, unswollen polymer particles comprising water-soluble and/or water-swellable polymer particles having particle sizes greater than 20 microns. The polymer may be wholly synthetic or may be a homogeneous blend with a natural polymer. The particles have a surface coating which promotes the dispersibility of the particles in water. The adhesive may be a brush-on adhesive or may be coated on to the sheet material as a pre-paste. Prepastes of synthetic polymer particles without the surface coating are also described.

EP 0 194 857 A2

# AQUEOUS ADHESIVES

Aqueous adhesives are used for bonding wallcoverings and can be used also for laminating sheets of cellulosic material, for instance to make card mats. There are, broadly, three types of commercial aqueous adhesives for such purposes.

One commercial type consists of a powder that is mixed with water to make a brushable composition. Powder compositions that are commercially available for this purposes are based primarily on starch and/or cellulose derivatives. Although these materials can give satisfactory adhesion they suffer from a number of disadvantages, including the difficulty of achieving uniform distribution of the powder in water. In particular it is difficult satisfactorily to mix powdered adhesive into an aqueous adhesive composition that is too dilute. Also the rheology and brushability of the compositions, especially on prolonged standing, is sometimes unsatisfactory. The wet adhesion on some substrates is sometimes inadequate.

A second type of composition consists of a dispersion in oil of adhesive particles formed of a synthetic polymeric material and suitable compositions are described in European Patent Specification No. 8213. Although the mixing and use properties of the compositions can be satisfactory it can be inconvenient for the retailer and customer to store a liquid composition as opposed to a dry powder.

The third main type of composition is a prepasted adhesive, that is to say a substrate carrying a dry coating that, upon contact with water, becomes adhesive. One widely used method of making prepastes is described in British Patent Specification 1,207,387, and comprises applying a solution of a high molecular weight synthetic polymer to the wallcovering and then dusting a starch derivative onto the solution. The starch derivative is, in practice, available only as a blend of a wide range of particle sizes including a large amount of very small size particles and the step of dusting this powder onto the wet substrate does, unfortunately, create a dust hazard. In European Patent Specification 77618 we describe how prepaste coatings can be formed of a blend of anionic polymer particles and cationic polymer particles, for instance by applying such particles onto the substrate from a dispersion in oil.

The polymer particles in the polymer-in-oil dispersions of EP 8213 and 77618 are always very small, typically below 2 microns. This is necessary in order to facilitate the production of a stable dispersion and the rapid dissolution of the particles into water. Such small particles would, if separated dry from the oil, cause a dust problem. Their application from an oil dispersion can reduce their adhesion, especially wet adhesion, properties.

It would be desirable to provide a powdered, water soluble adhesive that is non dusting and has good adhesion, brushing, mixing and rheology characteristics.

In one aspect of the invention there is provided a method of bonding a sheet material to a substrate using an aqueous adhesive formed by contacting with water a composition that is free of liquid and that comprises substantially dry, unswollen polymer particles comprising synthetic polymer and the method is characterised in that the particles consist of water-soluble and/or water-swellable polymer, substantially all have particle sizes greater than 20 μm and have a surface coating that promotes the dispersibility of the particles in water.

Two types of liquid-free compositions may be used for forming the aqueous adhesive.

The preferred composition comprises a flowable dry composition of particles. The aqueous composition can be made from this dry composition merely by adding the particles to water and, if necessary, stirring. The particles are preferably substantially spherical to prevent dust formed by attrition between particles and to improve the flow properties of the dry product.

The other type of composition is a prepasted substrate having a discontinuous coating of the particles bonded to it. Upon wetting this coating the particles swell and/or dissolve and the coating becomes adhesive. The prepaste may be made by dusting the dry particles on to a wallcovering or other substrate that has been wetted by water or, preferably, an aqueous adhesive, and then drying the coating.

The particles must be substantially unswollen in order that they do not stick to one another or, in the case of a prepasted substrate, to the opposite face of the substrate when it is wound up. Generally the water content of the particles will be not more than the equilibrium water content of the particles exposed to the atmosphere, generally below 25%, and usually below 15%, of the dry weight of the polymer in the particles.

Surface coatings that promote dispersability of the particles may include coating with surfactant, such as a non-ionic surfactant such as a polyethylene oxide compound or a sulphosuccinate, or coating with a low molecular weight water soluble polymer, for instance sodium polyacrylate preferably having a molecular weight below 5000 or poly - (diallyl dimethyl ammonium chloride). Preferably however the surface coating reduces the water swellability of the surface of the particles compared to the swellability of the centres of the particles.

The preferred surface coating is a layer of reduced permeability. Preferably the coating is of polymer that is more cross-linked, and therefore less swellable, than the remainder of the particles. This cross-linked surface layer may be formed by applying cross-linked polymer on to preformed particles but preferably it is formed by cross-linking the surface of the particles, for instance by contacting the surface of the polymer particles with a cross-linking agent for example, a covalent cross-linking agent, such as an epoxide or epichlorhydrin or an ionic cross linking agent, such as a compound of a polyvalent metal, for instance a sulphate, chloride or nitrate of iron, zinc, barium, zirconium, or preferably, calcium or aluminium.

Thus the particles are formed to have the desired water solubility or water swellability and are then given a surface treatment to give the desired surface cross-linking, for instance by stirring the particles with a solution of aluminium or calcium sulphate or other appropriate polyvalent metal compound in aqueous methanol or other suitable solvent, and the solvent is then evaporated.

A surface coating of metal ions, especially calcium ions, may have the effect of reducing the ion sensitivity of the polymer thus improving its dispersibility in water having a relatively high electrolyte concentration and improving the adhesive properties on plaster.

Another suitable surface treatment is application of a coating of a low molecular weight water soluble counterionic polymer, e.g., poly (diallyl dimethyl ammonium chloride) or other low molecular weight cationic water soluble polymer when the particles are anionic, or anionic polymer such as sodium polyacrylate when the particles are cationic.

The dry particle size of the particles will generally always be below 2 mm maximum and preferably most or all of the particles are below 1 mm. For best results at least 90%, and preferably substantially 100%, by weight of the particles are below 700 μm, preferably below 400 μm. The particle size can be as low as, for instance, 50 or even 30 μm but since the smaller particles may give dusting problems the minimum particle size is preferably above this, typically above 150 μm.

In order to promote flowability of the particles it is often preferred that they should be substantially spherical and they must not contain a significant proportion of fine dust, i.e., particles below 20 μm. The amount below 20 μm is generally 0 to 10%, preferably 0 to 5% by weight, most preferably 0%.

The particles can be made by comminuting polymer gel, for instance by comminuting and drying the product of gel polymerisation in conventional manner, but preferably any such comminution is conducted under conditions such that the particles have a substantially regular shape and size and preferably this is achieved by comminuting while in a liquid medium. In particular the comminution is preferably conducted as described in EP-A-0169674, the gel being milled whilst in an aqueous medium containing an equilibrating agent that substantially prevents dissolution of the polymer and aggregation of particles of the gel during the milling, followed by separation of the milled particles from the aqueous medium and drying the particles. This process may provide a surface coating on the milled particles of the equilibrating agent. Preferably therefore the equilibrating agent is a material that will also promote dispersability of the resultant particles in water, and in particular it is preferred that the equilibrating agent is a low molecular weight water soluble polymer, that may be coionic or counterionic.

Alternatively a gel polymer product may be chopped in a water-immiscible solvent in which it is not soluble, separated from the solvent and dried. Preferably the dispersion of gel particles in solvent is azeotroped to remove water and the particles are then separated from the solvent. It is possible to apply the surface coating from the non-aqueous solvent, for example by adding an appropriate coating composition to the solvent before azeotroping. The surface coating may be applied after the particles have been separated from the solvent, by known techniques.

When the particles consist of synthetic polymer they are preferably made by reverse phase polymerisation. Thus a solution of appropriate water soluble polymerisable monomer or monomers may be dispersed in a non-aqueous liquid in the presence of a suitable polymerisation stabiliser - (for instance as described in EP 0126528) and optionally a water-in-oil emulsifier and then subjected to polymerisation, usually in the presence of a water soluble initiator. Unswollen particles can be separated from the resultant dispersion of aqueous polymer particles in non-aqueous liquid, for instance by azeotroping to remove the water and then by filtration. Generally this reverse phase polymerisation is conducted as a bead polymerisation in the presence of a bead polymerisation stabiliser and in the absence of a water-in-oil emulsifier, to give a particle size of, generally, 150 microns or more. However the process can be conducted so as to give a much smaller particle size, for instance as low as 50 microns, in which event a small amount of a water-in-oil emulsifier may be desirable so as to facilitate the attainment of the desired particle size.

The reverse phase polymerisation may be conducted under conditions such that the resultant particles have a cross-linked surface coating, or the surface coating can be applied after the particles have been separated from the non-aqueous liquid.

Although it is sometimes satisfactory to use synthetic polymer that is soluble, especially in prepasted compositions, it is generally preferred that at least 50%, usually at least 80% and preferably all the synthetic polymer is a water swellable water insoluble polymer. Sometimes, for example, for brush-on adhesives it is found to be advantageous to include a minor amount, e.g., up to 20% by weight of particles of water-soluble polymer having the same charge as the water-insoluble polymer forming the major amount of particles present.

The synthetic polymer is generally formed by polymerisation of one or more water soluble mono-unsaturated monomers together with a cross-linking agent. The unsaturation is usually mono ethylenic. The degree of cross-linking may be such that the particles clearly remain as discrete particles even in the aqueous compositions (this being preferred when the aqueous composition is to be brushed on) or the particles may have the ability to tend to merge into one another.

The ethylenically unsaturated monomers may be non-ionic, anionic or cationic but preferably are a blend of 10 to 90%, preferably 40 to 85%, by weight non-ionic polymers. with the balance being ionic. The preferred non-ionic polymer is acrylamide. The ionic polymers can be cationic or anionic, for instance as discussed in European Patent Specification 8213, but best results are generally obtained with anionic comonomers. The anionic monomers may be carboxylic monomers, preferably acrylic acid, or sulphonic monomers, preferably allyl sulphonic acid or 2-acrylamide-2-methyl propane sulphonic acid. Blends of carboxylic and sulphonic monomers are particularly preferred, e.g., in weight ratios 1:4 to 4:1. Anionic monomers are generally present as the sodium or other alkali metal or water soluble salt. The inclusion of sulphonate monomer gives improved wet adhesion on plaster.

The optimum degree of cross-linking will depend upon the content of ionic groups and upon the degree of swellability that is desired. With preferred compositions, for instance those containing 40 to 85% acrylamide with the balance acrylic acid salt or other suitable acid salt, the amount of cross-linking agent is generally at least 10 ppm but usually not more than 200 ppm or, at the most 300 ppm. Amounts of 15 to 100 ppm are preferred. These amounts are expressed as amounts of methylene-bis-acrylamide as this is the preferred cross-linking agent, but equivalent amounts of other cross-linking agents can be used. The cross-linking agents are generally covalent cross-linking agents, preferably copolymerisable poly-ethylenically unsaturated monomers, generally di-ethylenically unsaturated. Cross-linking may alternatively or additionally be by ionic cross-linking agents, usually by multivalent metal ions such as aluminium, zirconium or titanium included in the polymerisation mixture.

The polymer particles may consist substantially only of polymerised monomers or may comprise synthetic polymer and natural polymer or a derivative. Thus some or all of the particles may each comprise a homogeneous blend of synthetic polymer with a natural polymer or a derivative of a natural polymer or may comprise a graft copolymer of synthetic polymer on water-swellable or water-soluble natural polymer or a derivative thereof. For example the particles may be formed by polymerising water-soluble monomer in the presence of gelatinised starch (or starch ether or acetate). This may be conducted as an exothermic bulk polymerisation using ungelatinised starch which is gelatinised during the polymerisation by the exotherm. The product of this process may then be comminuted and dried. Each of the particles is a soluble or swellable homogeneous blend of gelatinised starch, synthetic homopolymer and graft copolymer of synthetic polymer on gelatinised starch. In general the particles of synthetic/natural polymer blends may be made as described in WO 86/00315.

The polymer product formed by polymerising monomers in the presence of natural polymer may often have the desired degree of cross-linking without the specific addition of cross-linking agent. If it is inadequately cross linked then it is preferred to add ionic or covalent cross-linking agent to the reaction mixture, or to add an initiator for grafting.

The amount of synthetic polymer in the blend is generally 80% to 40%, preferably 60% to 40% and is preferably formed from a blend of acrylamide and anionic monomer, as discussed above. The inclusion of sulphonic monomer, generally in a ratio of sulphonic:acrylic acid of 4:1 to 1:1, is particularly preferred as the adhesion properties are superior to for instance methyl cellulose. The particle size is preferably below 400, preferably below 300, $\mu$m. Usually the amount below 50 $\mu$m is substantially zero but amounts of 2 to 10% can be advantageous, especially when the monomers include a sulphonate monomer.

The particles may comprise a mixture of particles of the natural/synthetic polymer blend and, e.g., up to 20% or 30% of other particles. These may consist of synthetic polymer, which may be soluble or insoluble. Desirable results are obtained if particles of a soluble polymer are included.

In products comprising synthetic and natural polymer or derivatives, the relative amounts of synthetic to natural polymer is suitably in the range 10:1 to 1:10, preferably in the range 4:1 to 1:2.

When the aqueous composition is to be made by stirring the particles with water it is generally preferred that the composition does not include any counterionic polymeric material as counterionic polymeric types may interreact in the aqueous composition. However in prepasted compositions it is often preferred for the prepaste to be formed of a blend of anionic particles with cationic particles, as described in European Patent Specification 77618. It may also be desirable to blend the described polymer particles, either for brush on compositions or for prepaste compositions, with non-ionic polymer, often a non-ionic natural polymer.

Although the provision of a surface coating that promotes dispersability in water is essential for the advantages of the invention when the particles are to be added to water and desirable in a prepaste, as it tends to promote the uptake of water by the particles, in prepasted compositions when the particles consist of synthetic polymer the provision of the surface coating may not be essential.

Accordingly a second aspect the invention includes prepasted substrates having a coating on one surface formed of substantially dry, unswollen polymer particles characterised in that the particles consist of water-soluble and/or water-swellable synthetic polymer and substantially all have a particle size greater than 20 $\mu$m. Preferably the synthetic polymer particles are the only particles in the coating, this polymer preferably, but not essentially, having a surface coating that promotes dispersability of the particles in water.

Prepastes according to the invention may be made by wetting one surface of a wallcovering or other suitable substrate with water or, preferably, aqueous adhesive material, for instance as described in British Patent Specification 1,207,387, and then dusting onto the wet substrate the described particles of synthetic polymer, and drying the coating. Since the particles of synthetic polymer have been made to a regular particle size of greater than at least 20 $\mu$m, thereby avoiding the dust hazards associated with traditional starch dusting methods.

The following examples illustrate the invention:

Example 1

A blend of 85 parts by weight acrylamide, 15 parts by weight sodium acrylate and 60 ppm methylene bis acrylamide is provided as a 50% solution in water. 130 grammes of this solution are dispersed into 265 grammes Solvent 41 in the presence of 0.2% of a polymeric amphipathic stabiliser as described in GB 1482515 and polymerisation is initiated in conventional manner and using ATPPM tertiary butyl hydroperoxide and 160 ppm sodium sulphite. When the polymerisation is complete the resultant dispersion is subjected to azeotroping and the particles are then separated by centrifuging and are dried. They have sizes mainly in the range 200 to 600 microns.

The particles are then coated with aluminium sulphate solution and are then dried. The resultant particles consist of 96% by weight polymer and 4% by weight of the aluminium sulphate coating.

The particles are free flowing and upon addition to water they dissolve substantially immediately to provide an aqueous adhesive having suitable rheology characteristics for use as an aqueous wallpaper adhesive. This aqueous solution may be brushed on to wallpaper and the paper hung in conventional manner.

Alternatively the particles may be scattered while dry on to the back of wallpaper carrying a water soluble adhesive layer which is then dried, to form a prepasted covering.

Example 2

An aqueous monomer mixture pH 7 was prepared by suspending ungelatinised starch acetate granules (2.50 parts:Kollotex 750, Tunnel AVEBE Starches Ltd.) in a solution of acrylamide (1.62 parts) and sodium acrylate (1.00 parts) in water (6.28 parts). Thermal initiator 2,2-azobis-(2-aminopropane) hydrochloride (0.0034 parts) was dissolved in the non-viscous suspension, which was de-oxygenated by passage of $N_2$ for 15 minutes.

Polymerisation was initiated by addition of ammonium persulphate (0.0011 parts) and ferrous ammonium sulphate (0.00008 parts) After 60 minutes the gel had reached a temperature of 87°C. After a further 2 hr. at this temperature, the resulting firm, rubbery gel, was cut into strips, minced and dried at 80°C. The dried granules thus obtained were ground and sieved through a 150 micron mesh to give Product 1. Its polymer content was 50% starch, 30% acrylamide, 20% sodium acrylate.

For Products 2-9, the powdered Product 1 was sieved to give the appropriate fraction, coated with either aluminium sulphate or poly-(diallyldimethyl ammonium chloride) or the cationic polymer plus salt (4% NaCl) and aqueous dispersions at 3% concentration.

Product 10, 11 and 12 were made by the same technique as Product 1 except that the 20% sodium acrylate was replaced by 10% sodium acrylate and 10% 2-acrylamido-2-methyl propane sulphonic acid sodium salt in Product 10 and by 5% sodium acrylate and 15% of the sulphonate in Products 11 and 12.

Two commercially available wallpaper adhesives were P and PP tested for comparison. The adhesion characteristics were determined using a heavy weight paper (anaglypta) on a black matt alkyd surface as follows.

Pieces of anaglypta wallpaper were cut to 25 x 50 cm, pasted and booked for 10 min before testing. The pieces of pasted paper were applied to the wall using a laying on brush. The sample was left for 30 sec before peeling from the top down to half way (top edge level with bottom edge) and the time taken for complete removal measured. The paper was applied to the surface three times in succession, up to a maximum of 240 sec each time. The score represents the combined times that the paper remained attached to the substrate (each unit = 80 sec).

The particle size distribution of the powder and the presence of a coating which may be applied to minimise lumping on dispersion in water can effect the wet adhesion characteristics. Some of these variations can be seen in Table 1. For example it can be seen that products 3 and 7 have superior adhesion characteristics on all surfaces except for plaster. Product 11 has excellent rheology and adhesion properties, especially on plaster. For products containing sulphonate monomer the inclusion of a very small (e.g., below 5 or 10%) by weight particles below 50 $\mu$m appears desirable, but for the other polymers it is best to omit this.

The properties of the polymers containing the sulphonate monomer varied according to polymerisation conditions, especially concentration. This may be due to variations in the amount of cross linking or grafting that occurred.

## Table 1

| Product | Particle size Distribution ($\mu$m) | Coating | Wet Adhesion | | | |
|---|---|---|---|---|---|---|
| | | | Emulsion | Plaster | Alkyd | |
| | | | | | Gloss | Matt |
| 2 | 0-150 | None | 8 | 3 | 4 | 3 |
| 3 | 53-150 | A | 9 | 4 | 9 | 9 |
| 4 | 0-150 | B | 3 | 0 | 6 | 9 |
| 5 | 0-250 | B | 2 | 0 | 9 | 7 |
| 6 | 53-150 | B | 3 | 3 | 4 | 5 |
| 7 | 53-250 | B | 8 | 1 | 9 | 9 |
| 8 | 0-250 | C | 2 | 2 | 8 | 6 |
| 9 | 53-250 | C | 6 | 3 | 7 | 9 |
| 10 | 0-250 | A | – | 4 | – | – |
| 11 | 0-250 | A | 1 | 9 | 3 | 5 |
| 12 | 53-250 | A | – | 3 | – | – |
| P | – | – | 2 | 7 | 3 | 5 |
| PP | – | – | 7 | 4 | 5 | 5 |

Notes:

1. Coating A = 4% aluminium sulphate

Coating B = 8% poly-(diallyldimethyl ammonium chloride)

Coating C = as for (B) but with additional 4% NaCl

2. P = Commercially available wallpaper adhesive based

on methyl cellulose (Perfax Methyl Special, SA Henkel)

PP = Commercially available wallpaper adhesive (Polycell Plus, Polycell Ltd., UK)

Instead of copolymerising with sodium acrylate, a cationic comonomer such as methyl chloride quaternised dimethylaminoethyl acrylate can be used.

**Claims**

1. A method of bonding a sheet material to a substrate using an aqueous adhesive formed by contacting with water a composition that is free of liquid and that comprises substantially dry, unswollen polymer particles comprising synthetic polymer, characterised in that the particles consist of water-soluble and/or water-swellable polymer, substantially all have a particle size greater than 20 $\mu$m and have a surface coating that promotes the dispersibility of the particles in water.

2. A method according to claim 1 in which the sheet material comprises paper or fabric and the substrate is a wall, ceiling or a further layer of sheet material.

3. A method according to claim 1 or claim 2 in which at least 95% by weight of the particles have a size of less than 2 mm and above 20 $\mu$m, preferably 90% by weight of the particles have a particle size of less than 700 microns, preferably below 400 $\mu$m.

4. A method according to any preceding claim in which a flowable dry composition of the polymer particles is dispersed into water, the resultant aqueous composition containing swollen and/or dissolved polymer is applied to the sheet material and the material is applied to the substrate.

5. A method according to any one of claims 1 to 3 in which the sheet material comprises a discontinuous coating of the particles, water is applied to the coating to swell and/or dissolve the polymer and the sheet material is applied to the substrate.

6. A method according to any preceding claim in which the polymer particles consist of synthetic polymer.

7. A method according to any one of claims 1 to 5 in which some or all of the polymer particles comprise a homogeneous blend of natural polymer or derivative with a synthetic polymer and/or comprise a graft copolymer of the synthetic polymer on natural polymer or derivative.

8. A method according to claim 6 or claim 7 in which at least 80% by weight of the particles are insoluble, swellable particles of cross linked polymer.

9. A method according to any of claims 6 to 8 in which the synthetic polymer is derived from a water soluble non ionic monomer, preferably acrylamide, with a water soluble ionic monomer.

10. A method according to claim 9 in which the ionic monomer comprises an ethylenically unsaturated sulphonate monomer.

11. A method according to claim 7 in which the particles are formed by copolymerising acrylamide with acrylic acid with allyl sulphonate and/or 2-acrylamido-2-methyl proponic acid (preferably all as sodium salts) in the presence of a starch or starch derivative.

12. A method according to any of claims 6 to 12 in which the particles are made by gel polymerisation followed by comminution in a liquid medium.

13. A method according to claim 6 in which the polymer has been made by reverse phase polymerisation of droplets of aqueous monomer mixture in a water-immiscible liquid and the particles are substantially spherical.

14. A prepasted sheet material carrying a coating on one surface formed of substantially dry, unswollen polymer particles, characterised in that the particles consist of water-soluble and/or water-swellable synthetic polymer and substantially all the particles have a particle size greater than 20 microns.